## Europäisches Patentamt
## European Patent Office
## Office européen des brevets

(19)

(11) Veröffentlichungsnummer: **0 100 876 B1**

(12) **EUROPÄISCHE PATENTSCHRIFT**

(45) Veröffentlichungstag der Patentschrift:
**12.04.89**

(51) Int. Cl.⁴: **B 29 C 45/14**

(21) Anmeldenummer: **83106652.7**

(22) Anmeldetag: **07.07.83**

(54) **Einspritzkopf, insbesondere zum Aufbringen einer Beschichtung auf flächige Werkstücke.**

(30) Priorität: **21.07.82 DE 3227186**

(43) Veröffentlichungstag der Anmeldung:
**22.02.84 Patentblatt 84/8**

(45) Bekanntmachung des Hinweises auf die Patenterteilung:
**12.04.89 Patentblatt 89/15**

(84) Benannte Vertragsstaaten:
**AT BE CH DE FR GB IT LI LU NL SE**

(56) Entgegenhaltungen:
**DE-A- 2 513 594**
**FR-A- 2 273 646**
**FR-A- 2 436 669**
**US-A- 3 936 261**
**US-A- 4 076 788**
**US-A- 4 082 486**

(73) Patentinhaber: **Menzolit-Werke Albert Schmidt GmbH & Co. KG, Bahnhofstrasse 31, D-7527 Kraichtal-Menzingen (DE)**

(72) Erfinder: **Ehnert, Gerd, Brucknerstrasse 6, D-7523 Graben-Neudorf (DE)**
Erfinder: **Schuster, Edgar, Eichenstrasse 13, D-7527 Kraichtal-Menzingen (DE)**
Erfinder: **Hartmann, Peter, Saalbachstrasse 20, D-7520 Karlsdorf (DE)**

(74) Vertreter: **Lempert, Jost, Dr.rer.nat. et al, Patentanwälte Dr. Ing. Hans Lichti Dipl.-Ing. Heiner Lichti Dipl.-Phys. Dr.rer.nat. Jost Lempert Durlacher Strasse 31 Postfach 410760, D-7500 Karlsruhe 41 (DE)**

ACTORUM AG

## Beschreibung

Die Erfindung betrifft einen Einspritzkopf, insbesondere zum Aufbringen einer Beschichtung, z.B. eines Lacks, auf flächige Werkstücke anläßlich deren Herstellung in einem Preßwerkzeug, mit einer Spritzdüse, einer zu dieser führenden Leitung für das Beschichtungsmittel und mit einer in einem Führungskanal von einer Fluidzylindereinheit, z.B. einem Hydraulikzylinder, bewegten Verschlußnadel für die Düsenöffnung, wobei die Beschichtungsmittel-Leitung unmittelbar am Umfang der Verschlußnadel in den Führungskanal mündet und durch die Verschlußnadel selbst verschließbar ist und der Innendurchmesser des Führungskanals für die Verschlußnadel zumindest im Bereich der Mündung der Beschichtungsmittelleitung im wesentlichen dem Durchmesser der Verschlußnadel selbst entspricht.

Derartige Einspritzköpfe werden beispielsweise beim sogenannten «In-Mold-Coating»-Verfahren zum Primerlackieren von preßgeformten Kunstharzplatten oder glasfaserverstärkten Polyesterplatten eingesetzt. Hierbei wird im allgemeinen derart vorgegangen, daß unmittelbar nach dem unter Preßdruck erfolgenden Polymerisieren und Aushärten der Kunstharzplatte die Werkzeuge einige Millimeter aufgefahren werden und dann der Lack durch einen gattungsgemäßen Spritzkopf zwischen dem oberen Presswerkzeug und dem Werkstück eingespritzt wird. Anschließend wird das Werkzeug wieder geschlossen und der Lack auf der Werkstückoberfläche verpreßt, und dabei ausgehärtet. Schließlich wird das Werkzeug zum Entnehmen des lackierten Werkstückes erneut geöffnet. Solche Verfahren sind beispielsweise in der DE-A-2 753 870 und der DE-C-2 442 227 beschrieben. Derartige Einspritzköpfe können aber auch in anderem Zusammenhang zum Aufspritzen oder Aufsprühen von Beschichtungen, insbesondere Lacken eingesetzt werden.

Die bekannten Einspritzköpfe weisen an ihrem Einspritzende eine Spritzdüse auf, die durch eine entweder in diese einführbare oder vor die Eingangsöffnung der Düse bewegbare Verschlußnadel verschließbar sind. Vor der Zutrittsöffnung des Beschichtungsmittels in die Düse ist ein erweiterter Hohlraum vorgesehen, in den die Beschichtungsmittel-Leitung mündet. Dieser Hohlraum ist ständig mit dem Beschichtungsmittel, z.B. Lack, gefüllt, welches unter Druck steht und nach Öffnen der Düse durch Zurückziehen der Verschlußnadel durch die Düse auf das Werkstück ausgespritzt wird. Dadurch, daß in diesem erweiterten Hohlraum immer Beschichtungsmittel steht und der Einspritzkopf sich nahe dem auf hoher Temperatur befindlichen Werkzeug befindet und eine ausreichende Kühlung durch Kühlschlangen, wie sie beim Stand der Technik vorgesehen sind, nicht erreicht wird, härtet Beschichtungsmittel, insbesondere am Umfang der Düsennadel aus und sammelt sich nach längerer Betriebsdauer zu einem größeren Klumpen an. Teile hiervon können mit aus der Düse ausgestoßen werden und führen zu Fehlern an der Beschichtung des Werkstücks.

Bei einem gattungsgemäßen Einspritzkopf zum Kunststoffspritzgießen von Formteilen nach der FR-A-2 273 646 mündet die Spritzmittelzuführleitung radial in einen Spritzdüsenkanal, der über den größten Teil seiner Länge konstanten Querschnitt aufweist und sich lediglich im Austrittsbereich verjüngt.

In dem Kanal ist eine an dessen Querschnitt angepaßte Verschlußnadel geführt, die während zwei Spritzvorgänge nicht nur die Austrittsöffnungen der Düse, sondern auch die Eintrittsöffnung der Spritzmittelleitung in den Düsenkanal versperrt. Es ist weiterhin eine Kühleinrichtung im Mündungsbereich der Kühlmittelzuleitung in dem Düsenkanal vorgesehen.

Bei derartigen Spritzköpfen wird beim Stillsetzen der Einrichtung wie der Spritzgießvorrichtung, oder eines Preßwerkzeugs zum Beschichten vorher hergestellter und geformter Formteile auch die Kühlmittelzufuhr des Einspritzkopfes abgestellt. Dies führt trotz einer ggfls. vorhandenen Isolierung des Einspritzkopfes dazu, daß dieser sich allmählich aufwärmt. Durch diese Temperaturveränderungen ergeben sich Dimensionsveränderungen, die zu einer Dehnung des Einspritzkopfes führen, wodurch es zu Beschädigungen kommen kann. Das gleiche Problem tritt bei Inbetriebnahme auf, wenn das Kühlmittel zu spät zugeschaltet wird. Auch in diesem Fall erwärmt sich der Einspritzkopf und es können Beschädigungen auftreten, beispielsweise in dem die Düsenspitze gegen ein Preßwerkzeug anlaufen kann.

Der Erfindung liegt daher die Aufgabe zugrunde unter Vermeidung der genannten Nachteile einen Einspritzkopf besser an die im Rahmen seines Einsatzes auftretenden Temperaturbedingungen anzupassen.

Erfindungsgemäß wird die genannte Aufgabe bei einem gattungsgemäßen Einspritzkopf dadurch gelöst, daß der Einspritzkopf mit seinem äußeren Ende gegenüber dem Preßwerkzeug federnd abgestützt ist. Die Verschlußnadel erfüllt nicht nur ihre herkömmliche Aufgabe als Einspritzorgan, verschließt nicht nur direkt die Mündung der Beschichtungsmittelzuführleitung, sondern dient selbst als Einspritzorgan, in dem sie als Düsennadel wirkt, durch die die in das Werkzeug einzuspritzende Materialmenge durch den Hub der Nadel dosiert und durch diese in das Werkzeug eingespritzt wird. Es wird ebenfalls zuverlässig ein Ansammeln von ausgehärtetem Beschichtungsmittel und damit jegliche Klumpenbildung vermieden. Eine sich im Bereich der Mündung der Beschichtungsmittel-Leitung direkt unterhalb der Seite der Düsennadel sich ggfls. bildende dünne Haut wird bei jedem Beschichtungsvorgang durch die Düse mit ausgestoßen, hierbei offenbar auch zerrissen, jedenfalls ist sie in der Beschichtung nicht wahrnehmbar oder lokalisierbar. Die Beschichtung ist vielmehr völlig einwandfrei. Als Düse wird grundsätzlich der Endbereich des Führungskanals für die Düsennadel bezeichnet, der direkt ohne umgebende Isolierung und Kühleinrichtungen in einem entsprechenden Durchbruch eines Werkzeugs eingesetzt ist.

Bei dem erfindungsgemäß ausgestalteten Einspritzkopf, aber grundsätzlich auch bei gattungsgemäßen Einspritzköpfen ergibt sich das Problem, daß das Beschichtungsmittel einerseits im Einspritzkopf selbst und insbesondere in der zur Spritzdüse führenden Beschichtungsmittel-Leitung sowie vorallem im Übergangsbereich von dieser Leitung zum Düsenkanal und zur Spritzdüse selbst kühlgehalten werden muß, damit es nicht vorzeitig austrocknet, daß aber andererseits sowohl eine ausreichend schnelle Aufheizung des Beschichtungsmittels beim Aufspritzen auf das Werkstück und insbesondere eine ausreichend hohe Temperatur des Beschichtungsmittels nach dem Aufspritzen vorallem auch unmittelbar hinter dem Düsenaustritt und damit eine ebenfalls ausreichend hohe Temperatur des Werkzeugs in diesem Bereich gewährleistet sein muß. Denn würde die Temperatur von Werkzeug und Beschichtungsmittel in diesem Bereich nicht ausreichend hoch sein, so würde kein sauberes Auswerfen des Beschichtungsmittels erfolgen und die Beschichtung könnte in diesem Bereich Fehler aufweisen. Es stellt sich daher das Problem einerseits in den Zuführleitungen insbesondere aber auch in der Spritzdüse selbst ein vorzeitiges Aushärten des Beschichtungsmittels zu verhindern, andererseits aber auch unmittelbar im Beschichtungsbereich neben der Austrittsstelle der Düse ein Abkühlen des Werkzeuges zu verhindern, um ein ausreichendes Aushärten zu gewährleisten. Zur Lösung des genannten Problems schlägt die Erfindung weiterhin bei einem Einspritzkopf der eingangs genannten Art und insbesondere der dargelegten Ausbildung vor, daß das Verhältnis von Durchmesser zur Länge der direkt in einem Werkzeug eingesetzten Spritzdüse zwischen 5:40 und 5:15 liegt. Ein solcher Bereich hat sich als geeignet herausgestellt, um einerseits die Temperatur im Spritzkopf selbst niedrig zu halten, daß ein Aushärten des Beschichtungsmittels am Spritzkopf vermieden wird und andererseits im Einsetzbereich der Düse das Werkzeug nicht abzukühlen, damit es im Austrittsbereich der Düse eine ausreichende Temperatur hält, um durch zügiges und sauberes Aushärten eine zufriedenstellende Oberfläche zu erhalten. Es wird also ein großer Temperaturgradient, also ein schroffer Temperaturübergang angestrebt und erfindungsgemäß erreicht, um das Beschichtungsmittel in der Düse kühl und fließfähig zu halten, andererseits es im Werkzeug und insbesondere auch im Bereich der Düsenöffnung kurzfristig aufheizen zu können, damit es aushärtet. Eine bevorzugte Ausgestaltung zeichnet sich dadurch aus, daß die Düsenlänge 10 bis 40 mm beträgt, wobei insbesondere vorgesehen ist, daß der Aussendurchmesser der Düse zwischen 4 bis 6 mm liegt. Die Kombination der vorgenannten Merkmale führt zu durchaus befriedigenden Ergebnissen. Optimale Ergebnisse in jeder Hinsicht und damit ideale Verhältnisse liegen vor, wenn das Verhältnis von Durchmesser zur Länge der Düse bei etwa 5:20 liegt. Hierbei betrifft die Düsenlänge dann etwa 20 mm und der Außendurchmesser derselben etwa 5 mm. Der Außendurchmesser der Düse und damit auch der Durchmesser der Düsennadel sollen so klein wie möglich sein, um eine scharfe Temperaturgrenze zwischen kühlem Einspritzkopf und heißem Werkzeug zu erhalten. Die untere Grenze der Stärke der Düsennadel wird durch deren erforderliche Stabilität begrenzt, so daß ein geeigneter Bereich der Düsennadelstärke zwischen 2 und 4 mm liegt, wobei insbesondere sich eine Stärke von ca. 3 mm mit einem unter Berücksichtigung der Toleranzen entsprechenden Innendurchmesser der Düse als vorteilhaft herausgestellt hat. Die genannten Verhältnisse und Dimensionierungen zeigen insbesondere die Kombination optimale Ergebnisse im Hinblick auf die dargelegten Anforderungen.

Zur Vermeidung des Aushärtens und der erwähnten Häutchenbildung wird weiterhin gemäß einer bevorzugten Ausgestaltung vorgesehen, daß im Einspritzkopf im wesentlichen koaxial zum Führungskanal der Düsennadel verlaufende Kühlmittelleitungen vorgesehen sind, die ggfls. an dem Einspritzende und an dem äußeren Ende des Einspritzkopfes über Querkanäle in Hintereinanderschaltung miteinander verbunden sind.

Durch diese Ausgestaltung wird einerseits eine zuverlässigere und bessere Kühlung des Einspritzkopfes erreicht. Darüberhinaus ist das Kühlmittelsystem fertigungstechnisch einfacher herzustellen, ohne daß Nachteile im Ergebnis vorhanden sind.

Eine bevorzugte Weiterbildung sieht vor, daß die federnde Abstützung im wesentlichen durch einerseits am Einspritzkopf, andererseits an einem Widerlager am Werkzeug anliegende Tellerfedern gebildet ist. Hierdurch wird dem Einspritzkopf die Gelegenheit gegeben, sich nicht in Richtung auf das Werkstück, sondern vom Werkzeug weg in Richtung auf sein äußeres Ende entgegen der Federwirkung zu bewegen und damit Längendehnungen auszugleichen. Auf der anderen Seite ist zugleich sichergestellt, daß der Einspritzkopf am Werkzeug stets unter Federspannung anliegt.

Weitere Einzelheiten und Vorteile der Erfindung ergeben sich aus der nachfolgenden Beschreibung der Zeichnung, in der ein Ausführungsbeispiel des erfindungsgemäßen Einspritzkopfes dargestellt ist. Dabei zeigen:

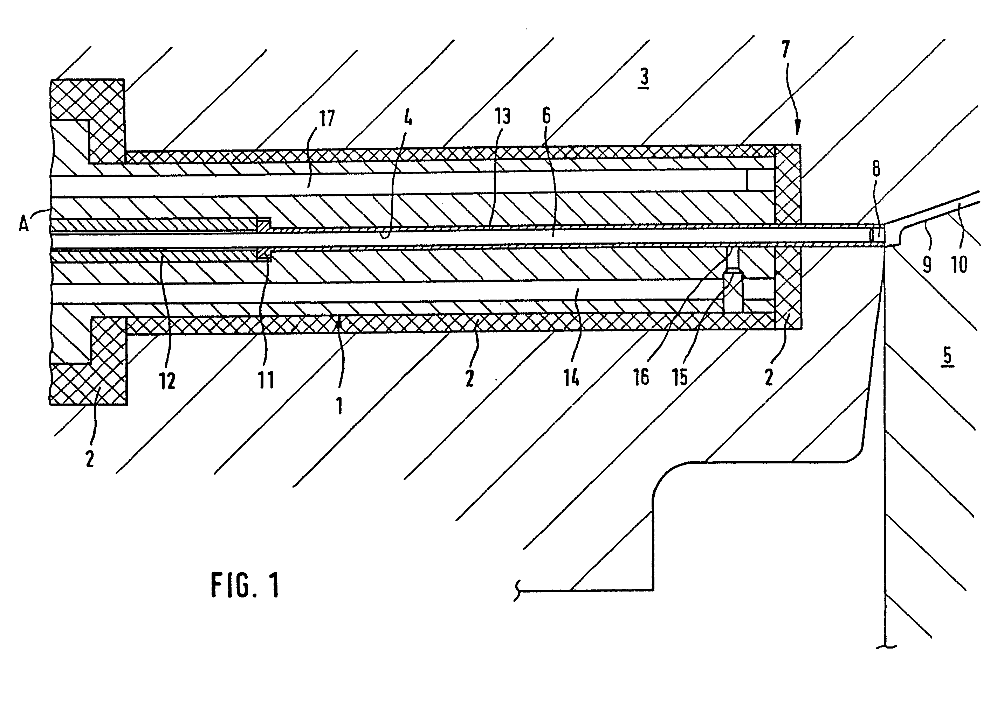

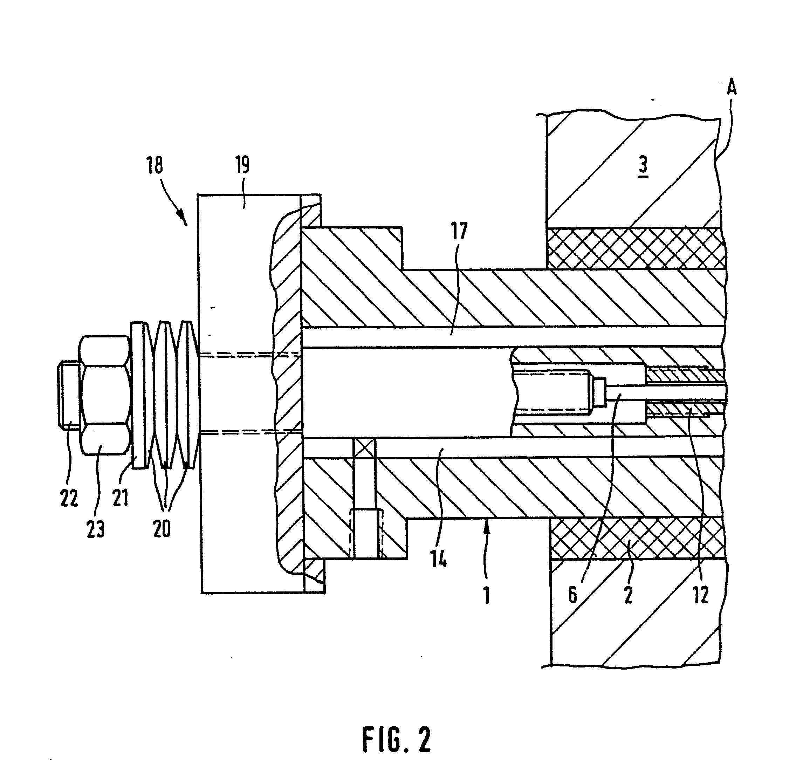

Figuren 1 und 2 das Ausführungsbeispiel des Einspritzkopfes in weitgehend geschnittener Seitenansicht, wobei der axiale Ansatzpunkt der beiden Teildarstellungen bei A ist.

Der Einspritzkopf ist mit 1 bezeichnet und von einer Isolierung 2 umgeben und in ein Preßwerkzeug eingesetzt, das aus einem Ober- und einem Unterwerkzeug 3, 5 besteht. Beim gezeigten Ausführungsbeispiel sitzt der Einspritzkopf 1 in einer Bohrung des Oberwerkzeugs 3. Der Einspritzkopf 1 weist einen zentralen axialen Kanal 4 auf, in dem als das Material dosierende und in das Werkzeug einspritzende Düsennadel ausgebildete Verschlußnadel 6 geführt ist. Der Führungskanal 4 ist am Einspritzende 7 des Einspritzkopfes 1 als Spritzdüse 8 ausgebildet, die seitlich in den zwischen den Preßwerkzeugen 3 und 5 gelegenen Raum 9, in dem das Werkstück 10 durch Pressen hergestellt wird, ausmündet.

Der Innendurchmesser der Spritzdüse 8 ist der gleiche, wie der Innendurchmesser des Führungskanals 4. Spritzdüse 8 und Führungskanal 4 sind im vorderen Bereich des Einspritzkopfes 1 von einer Führungshülse 13 für die Düsennadel 6 gebildet. Die Führungshülse 13 weist einen Bund 11 auf, über den sie mittels einer weiteren Hülse 12 mit einem am vorderen Ende befindlichen Gewinde (Fig. 2) in dem Einspritzkopf 1 gehalten ist. Die Länge des Einspritzkopfes 1 und insbesondere des Kanals 4 wird insbesondere durch die Stärke des Werkzeugs 3 bestimmt. Bei dünnerer Werkzeugwand kann die Länge des Kopfes 1 im Werkzeug 3 die im dargestellten Ausführungsbeispiel bis zu der flanschartigen Verbreitung im Bereich der Hülse 12 schon ca. 160 mm beträgt, insgesamt auf beispielsweise weniger als 100 mm reduziert werden, so daß sich bis zu einer Anpreßplatte 19 (die weiter unten erläutert ist) eine Länge von etwa 150 mm ergeben könnte.

Achsparallel und damit parallel zur Düsennadel 6 verläuft im Einspritzkopf 1 eine Leitung 14 für das Beschichtungsmittel. Die Leitung 14 ist am Einspritzende 7 radial nach innen geführt und mündet mit ihrem Endabschnitt 15 im Führungskanal 4 der Düsennadel 6. Wesentlich ist, daß der Führungskanal 4 in dem Mündungsbereich 16 der Leitung 14, 15 nicht erweitert ist, sondern hier im wesentlichen dem Außendurchmesser der Düsennadel 6 entspricht, die in einer auf das Einspritzende 7 hin vorgeschobenen Stellung die Mündung 16 der Beschichtungsmittel-Leitung verschließt. Die Leitung 14 endet mit ihrem Endabschnitt 15 also unmittelbar und direkt am Umfang der Düsennadel in dem Führungskanal 4 und bildet einen Teil der Einspritzdüse 8. Der Abstand der Mündung 16 der Beschichtungsmittel-Leitung 14 in dem Kanal 4 von dem Ende der Spritzdüse 8 wird im wesentlichen durch den Hub der Düsennadel 6 und damit durch die Fluidzylinder-Einheit 6' bestimmt, und sollte grundsätzlich nicht mehr als 150 mm betragen. Es ist anzustreben die Mündung 16 möglichst nahe dem Ende der Spritzdüse 8 anzuordnen, wobei allerdings die Mündung 16 im Bereich eines gekühlten und thermisch isolierten Raums liegen soll.

Die Düsennadel 6 wird als Kolben der Fluidzylindereinheit 6' (Fig. 2) die im Einspritzkopf 1 angeordnet ist, vor- und zurückbewegt. Nach einem Presshub wird das Oberwerkzeug 3 zusammen mit dem Einspritzkopf 1 um ein geringes Maß gelüftet. Die in der zurückgezogenen Stellung befindliche Düsennadel 6 wird nach vorne bewegt, wobei die in der Spritzdüse 8 befindliche Beschichtungsmasse auf die Oberfläche des Werkstücks 10 gelangt, anschließend wird das Oberwerkzeug 3 abgesenkt und die Beschichtungsmasse gleichmäßig verteilt und ausgehärtet. Durch diese Ausgestaltung wird im Gegensatz zum Stande der Technik, bei dem im Bereich der Einmündung der Beschichtungsmittel-Leitung eine Erweiterung des Führungskanals vor der eigentlichen Spritzdüse vorgesehen ist, verhindert, daß hier Beschichtungsmittel, also insbesondere Lack, in größeren Mengen eintrocknet und sich dadurch ansammelt, wie dies beim Stand der Technik der Fall ist, wo sich um die Düsennadel 6 im Laufe des Betriebs immer mehr Lack im ausgehärteten Zustand ansammelt. Auch anders als beim Stand der Technik wird durch die erfindungsgemäße Ausgestaltung nicht nur die Spritzdüse selbst, sondern auch die Mündung 16 der Beschichtungsmittel-Leitung 14 durch die Düsennadel unmittelbar verschlossen. Es kann daher bei jedem Spritzvorgang nur ein sehr geringer Anteil des Beschichtungsmittels in der Mündung 16 zurückbleiben, der dann beim nächsten Beschichtungsvorgang mit ausgestoßen wird, so daß sich das Beschichtungsmaterial im Einspritzkopf nicht ansammeln und somit auch nicht aushärten kann. Der ggfls. sich bildende Pfropfen führt im übrigen zu keinerlei Verschlechterung der Beschichtung; er konnte bei beschichteten Flächen nicht lokalisiert werden.

Ein Spülen der Leitungen 14, 15 und der Einspritzdüse 8 entfällt praktisch völlig. Der erfindungsgemäße Spritzkopf ist über viele Stunden ohne Reinigung mit besten Ergebnissen nutzbar; auch braucht bei Arbeitsunterbrechungen vor dem nächsten Benutzen keine Reinigung durchgeführt werden.

Während die Preßwerkzeuge 3, 5 zur Aushärtung der zu beschichtenden Werkstücke, z.B. Harzmatten, glasfaserverstärkte Polyestermatten od.dgl., wie auch zum schnellen Trocknen der aufgespritzten Beschichtung eine erhebliche Temperatur aufweisen müssen, darf der Einspritzkopf 1 selbst nicht warm sein, sondern muß kühl gehalten werden, damit das in der Leitung 14, 15 befindliche Beschichtungsmittel nicht aushärtet.

Demgemäß ist der Einspritzkopf 1 mit mehreren Kühlmittelleitungen 17 versehen, die koaxial zum Führungskanal 4 im Einspritzkopf 1 auf einem Kreis angeordnet sind. Die Kühlmittelleitungen 17 sind in ihren Anfangs- und Endbereichen in Hintereinanderschaltung miteinander verbunden, so daß der Einspritzkopf kontinuierlich von Kühlmittel mit einer Temperatur von 20–50 °C, vorzugsweise mit Raumtemperatur, durchströmt werden kann. Diese Ausgestaltung der Kühlmittelleitungen ist insbesondere fertigungstechnisch einfach zu verwirklichen und erlaubt eine optimale Kühlung des Einspritzkopfes 1 sowie insbesondere auch der Beschichtungsmittel-Leitung 14, 15.

Wie schon gesagt wurde, muß einerseits das Beschichtungsmittel in der Leitung 14, 15 und insbesondere auch an der Mündung 16 ausreichend kühl gehalten werden, um ein vorzeitiges Aushärten zu verhindern. Aus diesem Grunde ist auch die Mündung 16 in einem gekühlten, gegen die weitere Umgebung thermisch isolierten Raum angeordnet. Es ist aber auch so, daß die Isolierung 2 und damit die Kühlung 17 nicht beliebig nahe an den Austritt der Düse 8 herangeführt werden kann, so daß hierdurch schon der Minimalabstand der Mündung 16 vom Ende der Düse 8 bestimmt wird. Darüberhinaus ist aber auch ein beliebig nahes Heranführen der Kühlung 17 und Isolierung 2 an das Ende der Düse 8 nicht wünschenswert, da andererseits das auf das zwischen den Werkzeugen 3, 5 angeordnete Werkstück 10 auf gespritzte Beschichtungsmittel auch im Bereich des Einspritzendes der Düse 8 ausreichend schnell aushärten soll und daher das Werkzeug 3 auch in diesem Bereich eine ausreichende Temperatur von ca. 140–160 °C aufweisen muß. Es ergibt sich also das Problem, daß einerseits im Einspritzkopf selbst kein Beschichtungsmittel härten soll, andererseits die Düse das Werkzeug nicht abkühlen darf. Auch ergibt sich bei zu großem Durchmesser der Düse 8 und damit zu großem Durchmesser der Nadel 6 die Gefahr, daß das Werkzeug durch Wärmeleitung über dem Einspritzkopf zu stark abgekühlt wird und eine Unterhärtung des Materials eintritt. Daher wird ein möglichst geringer Durchmesser der Düsen bzw. der Nadel 6 angestrebt, wobei die untere Grenze des Durchmessers andererseits aber durch die Stabilität der Düsennadel bestimmt wird.

Um den genannten Kriterien in optimaler Weise zu genügen, wurde bei dem dargestellten Ausführungsbeispiel eine Länge der Düse 8 außerhalb der Isolierung von 20 mm und ein Durchmesser der Düse 8 von 5 mm bei einer Nadelstärke von 3 mm gewählt, so daß sich ein optimales Verhältnis von Durchmesser zur Länge der Düse 8 mit 5:20 ergibt.

Bei Arbeitsunterbrechungen, bei denen oft die Kühlmittelzufuhr abgestellt wird, nimmt der Einspritzkopf 1 trotz der Wärmeisolierung 2 allmählich die Temperatur des Werkzeugs 3, 5 an. Dies kann auch geschehen, wenn bei Betriebsbeginn das Kühlmittel nicht sogleich zugeschaltet wird. Durch die Erwärmung des Einspritzkopfes 1 ergeben sich dann Dimensionsveränderungen, die insbesondere dazu führen können, daß die Düse 8 weiter aus dem Oberwerkzeug 3 austritt und dann das Werkstück 10 oder auch Teile des Werkzeugs 3, 5 beschädigen kann. Zur Vermeidung derartiger Probleme ist der Einspritzkopf 1 an seinem rückwärtigen Ende federnd gegen das Oberwerkzeug 3 gelagert, so daß er bei Erwärmung rückwärts am äußeren Ende 18 aus dem Oberwerkzeug 3 austreten kann (Fig. 2). Hierzu ist am äußeren Ende 18 des Einspritzkopfes 1 eine Platte 19 befestigt, die als Widerlager für zwei seitlich des Einspritzkopfes 1 angeordnete Tellerfederpakete 20 dient, die mit ihrer anderen Seite einer Scheibe 21 anliegen, die wiederum über fest mit dem Werkzeug 3 verbundene Bolzen 22 mittels Muttern 23 einstellbar gehalten wird. Wenn aufgrund von Temperaturänderungen der Einspritzkopf 1 sich ausdehnt, kann er sich entgegen der Wirkung der Tellerfederpakete 20 aus dem Werkzeug heraus bewegen, wodurch Probleme und Beschädigungen im Bereich der Spritzdüse 8 vermieden werden.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Einspritzkopf, insbesondere zum Aufbringen einer Beschichtung, z.B. eines Lacks, auf flächige Werkstücke anläßlich deren Herstellung in einem Preßwerkzeug, mit einer Spritzdüse, einer zu dieser führenden Leitung für das Beschichtungsmittel und mit einer in einem Führungskanal von einer Fluidzylindereinheit, z.B. einem Hydraulikzylinder, bewegten Verschlußnadel für die Düsenöffnung, wobei die Beschichtungsmittel-Leitung (14) unmittelbar am Umfang der Verschlußnadel (6) in den Führungskanal (4) mündet und durch die Verschlußnadel (6) selbst verschließbar ist und der Innendurchmesser des Führungskanals (4) für die Verschlußnadel (6) zumindest im Bereich der Mündung (16) der Beschichtungsmittelleitung (14, 15) im wesentlichen dem Durchmesser der Verschlußnadel (6) selbst entspricht, dadurch gekennzeichnet, daß der Einspritzkopf (1) mit seinem äußeren Ende (18) gegenüber dem Preßwerkzeug (3) federnd abgestützt ist.

2. Einspritzkopf nach Anspruch 1, dadurch gekennzeichnet, daß der Durchmesser der Beschichtungsmittel-Leitung (14) zumindest im Bereich der Mündung (16) in den Führungskanal gleich dem oder kleiner als der Durchmesser der Verschlußnadel (6) ist.

3. Einspritzkopf nach Anspruch 1 oder 2, dadurch gekennzeichnet, daß die Spritzdüse (8) und zumindest teilweise der Führungskanal (4) durch eine die Verschlußnadel (6) führende, in den Einspritzkopf (1) eingesetzte Führungshülse (13) gebildet sind.

4. Einspritzkopf, insbesondere nach einem der Ansprüche 1–3, dadurch gekennzeichnet, daß das Verhältnis von Durchmesser zur Länge der direkt in einem Werkzeug (3) eingesetzten Spritzdüse (8) zwischen 5:40 und 5:15 liegt.

5. Einspritzkopf nach Anspruch 4, dadurch gekennzeichnet, daß das Verhältnis von Durchmesser zur Länge der Düse (8) bei etwa 5:20 liegt.

6. Einspritzkopf nach Anspruch 4 oder 5, dadurch gekennzeichnet, daß die Düsenlänge 10 bis 40 mm beträgt.

7. Einspritzkopf nach Anspruch 6, dadurch gekennzeichnet, daß die Düsenlänge etwa 20 mm beträgt.

8. Einspritzkopf nach einem der Ansprüche 4 bis 7, dadurch gekennzeichnet, daß der Außendurchmesser der Düse (8) zwischen 4 bis 6 mm liegt.

9. Einspritzkopf nach Anspruch 8, dadurch gekennzeichnet, daß der Außendurchmesser der Düse (8) etwa 5 mm beträgt.

10. Einspritzkopf nach einem der Ansprüche 4 bis 9, dadurch gekennzeichnet, daß die Stärke der Verschlußnadel zwischen 2 und 4 mm beträgt.

11. Einspritzkopf nach Anspruch 10, dadurch gekennzeichnet, daß die Stärke der Verschlußnadel bei ca. 3 mm liegt.

12. Einspritzkopf nach einem der Ansprüche 1 bis 11, dadurch gekennzeichnet, daß im Einspritzkopf (1) im wesentlichen koaxial zum Führungskanal (4) verlaufende Kühlmittelleitungen (17) vorgesehen sind.

13. Einspritzkopf nach Anspruch 12, dadurch gekennzeichnet, daß die Kühlmittelleitungen (17) an dem Einspritzende und an dem äußeren Ende (18) des Einspritzkopfes (1) über Querkanäle in Hintereinanderschaltung miteinander verbunden sind.

14. Einspritzkopf nach einem der vorangehenden Ansprüche, dadurch gekennzeichnet, daß die federnde Abstützung im wesentlichen durch einerseits am Einspritzkopf (1), andererseits an einem Widerlager (19) am Werkzeug (3) anliegende Tellerfeder (21) gebildet ist.

**Claims**

1. Injection head, particularly for applying a coating, e.g. of varnish, to flat workpieces in connection with the production thereof in a mould, with an injection nozzle, a line for the coating medium leading thereto and with a closure needle for the nozzle opening moved in a guide channel of a fluid cylinder unit, e.g. a hydraulic cylinder, in which the coating medium line (14) issues directly on the circumference of the closure needle (6) into the guide channel (4) and can be closed by the closure needle (6) and the internal diameter of the guide channel (4) for the closure needle (6), at least in the vicinity of the opening (16) of the coating medium line (14, 15), substantially corresponds to the diameter of the closure needle (6), characterized in that the outer end (18) of injection head (1) is resiliently supported with respect to the mould (3).

2. Injection head according to claim 1, characterized in that the diameter of the coating medium line (14), at least in the vicinity of the opening (16) into the guide channel, is the same or smaller than the diameter of the closure needle (6).

3. Injection head according to claims 1 or 2, characterized in that the injection nozzle (8) and at least in part the guide channel (4) are formed by a guide sleeve (13) guiding the closure needle (6) and inserted in injection head (1).

4. Injection head, particularly according to one of the claims 1 to 3, characterized in that the ratio of the diameter to the length of the injection nozzle (8) directly inserted in a mould (3) is between 5:40 and 5:15.

5. Injection head·according to claim 4, characterized in that the ratio of the diameter to the length of the nozzle (8) is approximately 5:20.

6. Injection head according to claim 4 or 5, characterized in that the nozzle length is 10 to 40 mm.

7. Injection head according to claim 6, characterized in that the nozzle length is approximately 20 mm.

8. Injection head according to one of the claims 4 to 7, characterized in that the external diameter of nozzle (8) is between 4 and 6 mm.

9. Injection head according to claim 8, characterized in that the external diameter of nozzle (8) is approximately 5 mm.

10. Injection head according to one of the claims 4 to 9, characterized in that the thickness of the closure needle is between 2 and 4 mm.

11. Injection head according to claim 10, characterized in that the thickness of the closure needle is approximately 3 mm.

12. Injection head according to one of the claims 1 to 11, characterized in that coolant lines (17) substantially coaxial to guide channel (4) are provided in injection head (1).

13. Injection head according to claim 12, characterized in that at the injection end at the outer end (18) of injection head (1), the coolant lines (17) are interconnected in series by means of transverse channels.

14. Injection head according to one of the preceeding claims, characterized in that the resilient support is substantially formed by cup springs (21) engaging on the one hand on injection head (1) and on the other hand on an abutment (19) on mould (3).

**Revendications**

1. Une tête d'injection, plus particulièrement pour l'application d'un revêtement, par exemple une couche de peinture sur des pièces plates, lors de leur fabrication dans un outil de presse, munie d'une buse d'injection, ainsi que d'un tuyau d'admission pour la matière de revêtement et d'une aiguille d'obturation pour l'orifice de la buse, se déplaçant dans un canal de guidage et actionnée par un dispositif à vérin à liquide, par exemple un vérin hydraulique, où le tuyau pour la matière de revêtement (14) débouche dans le canal de guidage (4), directement à la circonférence de l'aiguille d'obturation (6) et qui peut être obturé par l'aiguille d'obturation même et où le diamètre intérieur du canal de guidage (4) pour l'aiguille d'obturation (6), au moins à l'endroit du débouchement (16) du tuyau pour la matière de revêtement (14, 15), correspond pratiquement au diamètre de l'aiguille d'obturation (6), caractérisée en ce que l'extrémité (18) de la tête d'injection (1) est supportée de façon élastique par rapport à l'outil de presse (3).

2. Tête d'injection selon la revendication 1, caractérisée en ce que le diamètre du tuyau pour la matière de revêtement (14), au moins à l'endroit du débouchement (16) dans le canal de guidage est égal ou plus petit que le diamètre de l'aiguille d'obturation (6).

3. Tête d'injection selon la revendication 1 ou 2, caractérisée en ce que la buse d'injection (8) et au moins une partie du canal de guidage (4) sont formées par un manchon-guide (13), guidant l'aiguille d'obturation (6) dans la tête d'injection (1).

4. Tête d'injection, plus particulièrement selon une des revendications 1 à 3, caractérisée en ce que le rapport entre le diamètre et la longueur d'une buse d'injection (8) montée directement dans un outil de presse (1) se situe entre 5:40 et 5:15.

5. Tête d'injection selon la revendication 4, caractérisée en ce que le rapport entre le diamètre et la longueur de la buse (8) se situe à environ 5:20.

6. Tête d'injection selon la revendication 4 ou 5, caractérisée en ce que la longueur de la buse est de 10 à 40 mm.

7. Tête d'injection selon la revendication 6, caractérisée en ce que la longueur de la buse est environ 20 mm.

8. Tête d'injection selon une des revendications 4 à 7, caractérisée en ce que le diamètre extérieur de la buse (8) se situe entre 4 et 6 mm.

9. Tête d'injection selon la revendication 8, caractérisée en ce que le diamètre extérieur de la buse est environ 5 mm.

10. Tête d'injection selon une des revendications 4 à 9, caractérisée en ce que l'épaisseur de l'aiguille d'obturation se situe entre 2 et 4 mm.

11. Tête d'injection selon la revendication 10, caractérisée en ce que l'épaisseur de l'aiguille d'obturation est de 3 mm environ.

12. Tête d'injection selon une des revendications 1 à 11, caractérisée en ce qu'on a prévu dans la tête d'injection (1) des canalisations (17) pour un réfrigérant, aménagées de façon principalement coaxiale par rapport au canal de guidage (4).

13. Tête d'injection selon la revendication 12, caractérisée en ce que les canalisations (17) pour un réfrigérant sont interconnectées en série par des canalisations transversales dans l'extrémité d'injection et dans l'extrémité extérieure (18) de la tête d'injection (1).

14. Tête d'injection selon une des revendications précédentes, caractérisée en ce que le support élastique est constitué principalement par des ressorts à cuvette (21) s'appuyant d'une part sur la tête d'injection (1) et d'autre part sur une butée (19) de l'outil.

FIG. 1

EP 0 100 876 B1

FIG. 2